# EUROPEAN PATENT SPECIFICATION

(11) **EP 2 704 475 B1**
(45) Date of publication and mention of the grant of the patent: **28.02.2018**
(21) Application number: 12290285.1
(22) Date of filing: 29.08.2012
(51) Int. Cl.: H04W 36/04, H04W 24/02

(54) **Method for finding an optimal position of a new pico cell within a macro cell**
Verfahren zum Finden einer optimalen Position einer neuen Picozelle innerhalb einer Makrozelle
Procédé permettant de trouver une position optimale d'un nouveau picocellule à l'intérieur d'une macrocellule

(43) Date of publication of application: 05.03.2014
(73) Proprietor: ALCATEL LUCENT, 92100 Boulogne-Billancourt (FR)
(72) Inventor: Bakker, Hajo, 71735 Eberdingen (DE); Doetsch, Uwe, 74392 Freudental (DE); Mayer, Hans-Peter, 71254 Ditzingen (DE)
(74) Representative: Richardt Patentanwälte PartG mbB

(56) References cited:
- EP-A1- 2 009 941
- ALCATEL-LUCENT ET AL: "Scenarios for Further Enhanced Non CA-based ICIC for LTE", 3GPP DRAFT; R1-112411_EICIC_SCENARIO_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 18 August 2011 (2011-08-18), XP050537809, [retrieved on 2011-08-18]
- RESEARCH IN MOTION UK LIMITED: "HetNet Mobility Performance with Cell Range Expansion", 3GPP DRAFT; R2-121279, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20120326 - 20120330, 17 March 2012 (2012-03-17), XP050605859, [retrieved on 2012-03-17]

## Description

### Field of the invention

The invention relates to the field of mobile telecommunication, more specifically to a method for finding an optimal position of a new pico cell within a macro cell.

### Technical background

In mobile telecommunications pico cells are used to increase the capacity of cellular networks at places with high bandwidth demand, e.g. shopping malls or pedestrian zones. Pico cells are provided by pico base stations, i.e. pico eNBs (envolved Node B).

Pico eNBs will be deployed with low output power, e.g. 1 Watt which results in relatively small footprint of pico cells compared to macro cells. Depending on the location of the pico cell, near to the antenna of the macro cell or within the main antenna loop, the footprint of a pico cell is in the area of 10 to 40 meters.

As pico eNBs have a small form factor several places might be possible for the deployment of a new pico cell, e.g. left, right side of a street, lamp post etc.

System simulations show that the performance increase by applying a pico cell within the radio footprint of a macro cell is strongly related to the distribution of mobile terminals within the radio footprint of a pico cell. The gain of the pico cell is raising the closer the mobile terminals are to the center of the pico cell.

Document EP 2 009 941 A1 discloses a method of adjusting the position of a picocell base station and is directed to this method in regard to users belonging to a particular home or office, being preferred users, in order to minimize handover from non-preferred users.

In "Scenarios for Further Enhanced Non CA-based ICIC for LTE", ALCATEL-LUCENT et al., 3GPPDraft R1-112411, XP050537809, a study is disclosed, concerning Cell Range Expansion with Almost Blank Subframes in a scenario having a pico cell within a macro cell, the study being directed to a user distribution.

The text document "HetNet Mobility Performance with Cell Range Expansion", RESEARCH IN MOTION UK LIMITED, 3GPP Draft R2-121279, XP050605859 discloses an analysis of a HetNet Mobility Performance with Cell Range Extension with one of the results recommending that not every UE in the Range Extension should connect to pico, instead, in the scenario considered in cited text dokument, a connect to the macro cell is recommended.

### Summary

It is an object of the present invention to provide a method for finding an optimal position of a new pico eNB within a macro cell to enable the optimum system performance, e.g. data throughput within the pico cell.

This object is achieved by the method according to the independent claim 1. Embodiments of the invention are given in the dependent claims.

The invention relates to a method for finding an optimal position of a pico eNB of a new pico cell within the radio footprint of a macro cell served by a macro eNB. In a first step possible installation positions or installation places for the pico eNB to be installed are explored. The installation places must be located within the radio footprint of a macro cell. Subsequently a pico eNB is installed at one of the explored installation places. The pico cell is put into operation to enable mobile terminals to initiate a handover request. Mobile terminals may be understood herein for example as a mobile telephone, a mobile computer, a personal digital assistant or a smart-phone. The number of handover requests from mobile terminals served by the macro eNB of the macro cell towards the pico cell are counted within a predetermined duration of time by the macro eNB or the macro cell management system. Afterwards the steps of installing, putting into operation and counting of handover requests are repeated for all other explored installation places;
In a final step the optimal installation place is selected by comparing the number of handover requests within the predetermined duration of time and choosing the installation place with maximum number of handover requests. By performing the method a network operator will find the best location for the pico eNB with minimum effort.

In a preferred embodiment of the invention the pico eNB is a temporarily installed base station. Preferably the eNB is adapted to be easily mounted for the characterization of the different installation places. Therefore the installation place can be changed with low effort.

According to a further embodiment of the invention the pico cell is configured to enable mobile terminals to detect the pico cell and to request a handover from the macro cell towards the pico cell. For example the pico cell is not configured with a fully operating X2/S1-Interface according to 3GPP standards, which would require a fiber or coax cable connection to the Mobility Management Entity (MME), but only provides the basic configuration to simulate a pico cell which can be entered by the mobile terminals within the footprint of the newly installed pico cell. After requesting the handover from the macro cell towards the newly installed pico cell the handover will be blocked by the macro cell.

According to a further embodiment of the invention the pico cell is configured to transmit only signals necessary for the handover of a mobile terminal from the macro cell to the pico cell. Preferably only the handover relevant information, i.e. reference signals or pilots and the sync channel including the PCI of the pico cell are broadcasted by the pico eNB. Therefore the effort for installing the pico cell can be reduced.

In a preferred embodiment of the invention the pico cell is configured not providing a broadcast channel. So mobile terminals leaving the idle mode within the radio footprint of the pico cell will not detect a broadcast channel and will consequently attach to the already developed macro cell.

According to a further embodiment of the invention the pico cell is a test pico cell with a test pico eNB which can be reused for each deployment analysis. The equipment and the configuration possibilities of the test pico eNB are preferable reduced, so the test pico cell is adapted to meet the requirements for investigating the optimal installation place but not to provide a fully operating pico cell. Preferably the pico eNB is battery-powered, so no external electrical power supply is necessary.

In a preferred embodiment of the invention the pico eNB is a fully operational pico eNB which is configured with limited functionality for measure purposes. Using a fully operational pico eNB the eNB is preferably configured as barred or reserved for operator use. If the final position has been determined and the pico cell is ready for operation, this feature has to be disabled, i.e. the pico cell will accept mobile terminals. By using the final PCI (physical cell identity) of the pico cell PCI collision or PCI confusion with other pico cells or macro cells can be detected at all possible installation points.

Preferably the number of handover requests is sequentially determined by using a sole pico eNB. The pico eNB is consecutively installed at the different installation places for performing the handover measurements. Therefore the required hardware equipment is minimized.

In a preferred embodiment of the invention also handover requests are counted in the pico cell border area, which is scheduled during Almost Blank Subframes (ABS) of the macro cell. For this reason not only handover requests of mobile terminals within the inner part of the pico cell can be detected but also the request of mobile terminals within the cell border area, i.e. the maximization of the system performance by using eICIC (enhanced Inter-Cell Interference-Coordination) is determined.

According to a further embodiment of the invention the maximum number of handover requests is counted at different bias values, wherein the bias value defines the handover condition between the macro cell and the pico cell. When performing the measurement at different bias values the extent of the cell border area is changed and the gain of system performance can be determined. Preferably bias values in the range of 0dB to 20dB are chosen, in particular 0dB, 3dB, 6dB, 12dB, 16dB and 20dB.

According to a further embodiment of the invention the optimal installation point is determined by also evaluating the mobile speed estimation value of the macro cell. Thereby fast moving mobile terminals which only have a short resting time within the pico cell can be detected. Those fast moving mobile terminals will cause a handover request, but will not increase the system performance. Preferably the handover requests initiated by fast moving mobile terminals are disregarded.

According to a further embodiment of the invention the optimal installation point is determined by establishing the maximum number of handover requests for different bias values and determining the installation place which obtained the maximum number of handover requests at the different bias values most frequently. So the overall performance of the pico cell at a certain installation place with reference to the performance of the pico cell at the other installation places is used for establishing the optimal installation place.

### Brief description of the drawings

In the following embodiments of the invention are explained in greater detail, by way of example only, making reference to the drawings in which:
- Fig. 1 :: is a schematic view of a pico cell arrangement within a macro cell;
- Fig. 2 :: is a schematic view of a pico cell arrangement with a pico eNB within a macro cell with a macro eNB and the respective receive signal levels of the macro cell and the pico cell;
- Fig. 3:: is a schematic view of the possible installation places for a new pico eNB in an urban environment.

Like numbered elements in these figures are either identical elements or perform the same function. Elements which have been discussed previously will not necessarily be discussed in later figures if the function is identical.

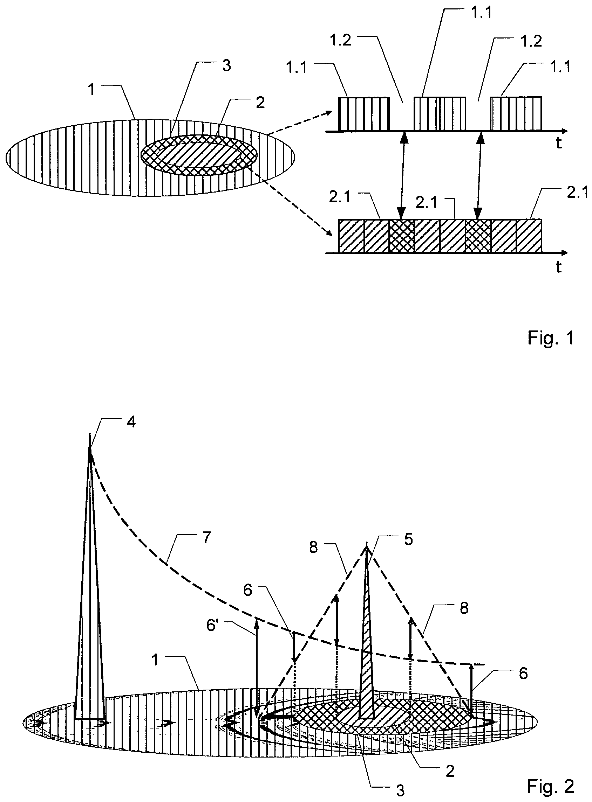

In Fig.1 the principle of enhanced Inter-Cell Interference-Coordination (eICIC) is shown which is used in heterogeneous networks, i.e. networks using macro and pico cells. The outer ellipse is the radio footprint of a macro cell 1, which is illustrated by vertical dashes. Within the macro cell 1 there is a radio footprint of a pico cell 2, which is illustrated by inclined dashes. In the border area around the pico cell 2 a ring-shaped cell border area 3 is build.

The mobile terminals in the vertically dashed area 1 are scheduled by a macro eNB 4 by a frame-based communication link known in Third Generation Partnership Project (3GPP) specifications. The transmitted subframes 1.1 provided by the macro cell 1 are also illustrated by vertical dashes. eICIC leads to establishment of Almost Blank Subframes (ABS) 1.2 which are not used for data transmission by the macro cell 1. During ABS only pilots and broadcast signals of the macro cell 1 are transmitted.

Mobile terminals which are located in the pico cell 2, so-called pico cell inner mobiles, use subframes 2.1 provided by the pico cell 2 for transmitting data. Subframes 2.1 of the pico cell 2 are synchronous to subframes 1.1 of the macro cell 1.

Also mobile terminals which are located within the cell border area 3, so-called pico cell border mobiles, can be scheduled by the pico eNB 5 of the pico cell 2 during the Almost Blank Subframes 1.2 (as indicated by the arrows). The scheduling of pico cell border mobiles is called pico range expansion.

Figure 2 shows the macro cell 1 scheduled by the macro eNB 4 and the pico cell 2 and cell border area 3 scheduled by the pico eNB 5. The handover event between pico cell 2 and macro cell 1 is influenced by several parameters. One parameter is an offset parameter related to the pico cell 2, which determines the difference of the signal receive levels 7, 8 of the macro eNB and the pico eNB, so-called bias-value 6, 6'. By increasing the bias-value6, 6' the cell border area 3 between the pico cell 2 and the macro cell 2 increases, so the area scheduled by the pico eNB 5 is extended.

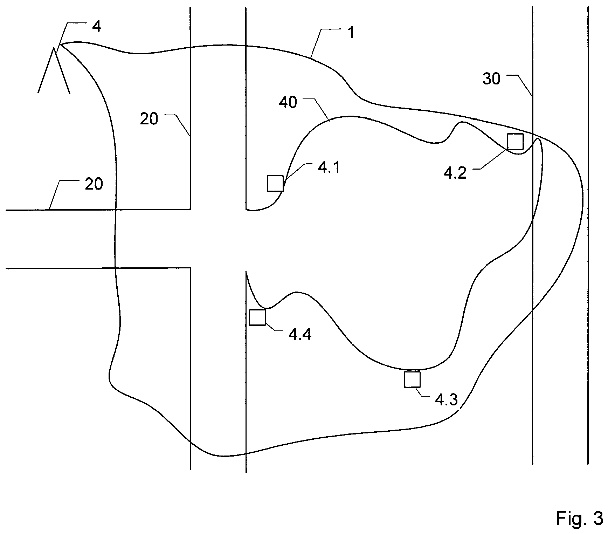

In the following the method for finding an optimal position of a pico eNB 5 of a new pico cell 2 within the radio footprint of a macro cell 1 served by a macro eNB 4 is described with reference to Fig. 3.

Fig. 3 shows a schematic top view on an exemplary urban environment. Reference numeral 1 shows the macro cell radio footprint which is served by the macro eNB 4. In the area of the macro cell 1 there is a pedestrian street 20, a highway 30 and a public place 40, which is located between the pedestrian street 20 and the highway 30. As an example four possible installation places 4.1- 4.4 for pico cell equipment, particularly a pico eNB 5 were explored. For example, installation places 4.1- 4.4 could be street corners, lamp posts etc.

In a first step, a pico eNB is temporarily installed at one of the explored installation places 4.1- 4.4. Instead of installing complete pico cell equipment with a fully operating X2/S1 interface and a fiber or coax connection to the Mobility Management Entity (MME), a test pico eNB or a real pico eNB with limited functionality and a dummy physical cell ID (PCI) can be used. The test pico eNB can be a battery powered device, which is adapted to be easily mounted at the different installation places 4.1-4.4. The functionality of the pico eNB is adaped to transmit the relevant signals enabling the mobile terminals to detect the pico cell 2 and to request a handover to the pico cell 2. After detecting the pico cell 2 the mobile terminals will transmit the handover request to the macro cell 1, which actually schedules the mobile terminal. Preferably only the handover relevant information, i.e. reference signals or pilots and the sync channel including the PCI are broadcasted by the pico eNB 5. Mobile terminals which are turned on or leave the idle mode within the coverage of the pico cell will not detect a broadcast channel of the pico cell and therefore attach to the macro cell 1.

The handover of the macro cell 1 to the pico cell will not be carried out, but the number of handover attempts referring to the dummy PCI of the pico cell are counted for a predefined period of time with respect to the actual installation place 4.1-4.4.
Preferably the pico eNB 5 is used which should be deployed later on in the measured pico cell. The pico cell has to be configured as barred or reserved for operator use. This configuration could be done within the System Information Block (SIB1) (3GPP-specification TS 36.304, chapter 5.3.1, fields "cellbarred" and "cellReservedForOperatorUse"). When configured as barred or reserved for operator use the mobile terminals do not treat the pico cell as a candidate during the cell selection. The advantage of using a pico eNB 5 which is used later on for deploying is that a final PCI can be used and a PCI confusion and/or collision with already deployed other macro cells or pico cells can be detected at all explored installation places 4.1-4.4.

To serve as many mobile terminals in the center of the pico cell as possible, the mobile terminal distribution is detected subsequently for each installation place 4.1-4.4 by counting the handover attempts from mobile terminals served by the macro cell 1 to the pico cell 2. In the example of Fig. 3 four measurement cycles has to be carried out to count the handover attempts for each installation place 4.1- 4.4. Preferably each measurement cycle comprises several sub-measurements, particularly at the cell border window (CBW) which delimits the boundary between the pico cell 2 and the cell border area 3. The measurements are done at different bias values to change the dimensions of the pico cell. The bias values can be choosen between 0dB and 20dB wherein for a pico cell relying on 3GPP release R8 the bias-value is limited to 6dB. Terminals of later releases R10 or R11 will be able to work with bias-values up to 20dB. Preferably sub-measurements are made for the following bias values: 0dB, 3dB, 6dB, 12dB, 16dB and 20dB.

The following table shows an example for counted attempts at the different installation places 4.1- 4.4 of Fig. 3 at different bias-values during a predetermined duration of time:

**Table 1**

| possible installation place | HOs attempts at 0dB bias | HOs attempts at 3 dB bias | HOs attempts at 6 dB bias | HO attempts at 12 db bias | HO attempts at 16 dB bias |
|---|---|---|---|---|---|
| 4.1 | 584 | 789 | 1457 | 2006 | 5233 |
| 4.2 | 967 | 1200 | 1900 | 2500 | 6000 |
| 4.3 | 230 | 378 | 800 | 1500 | 3456 |
| 4.4 | 347 | 578 | 945 | 4034 | 8064 |

At the bias-values of 0dB - 6dB installation place 4.2 shows the maximum number of handover attempts. Installation place 4.4 shows the maximum number of handover attempts at bias-values of 12dB and 16dB.

Preferably the network operator will take the mobile terminal speed estimation available inside the macro cell 1 into account for detecting the optimal installation place 4.1-4-4.
Mobile terminals, which are moving at a high speed (e.g. mobile terminals fast moving on the highway 30) will request a handover to the pico cell 2. After short resting time within the pico cell 2, they would leave the pico cell 2 again and request a further handover. Therefore taking the speed estimation value into account the measurement result can be corrected and only stationary or slowly moving mobile terminals can be considered. In the example of Table 1 the network operator will chose installation place 4.2 for deploying the pico cell.

For handover measurement the macro eNB 4 has to be configured with the PCI of the new pico cell. Also the parameters offsetFreq (Ofn) and cell specific offset of pico cell (Ocn or bias-value) (3GPP-specification TS 36.331, chapter 5.5.4.4) has to be configured. Furthermore the macro eNB 4 has to be configured, that only the handover events (A3 events, 3GPP-specification TS 36.331, chapter 5.5.4.4) including the PCI of the newly installed pico cell 2 are counted and the handover procedure towards the pico cell will not be started. The A3 events resulting from mobile terminals not including the PCI of the newly installed pico cell will result in a normal handover.

### List of reference numerals

- 1: macro cell
- 1.1: subframe
- 1.2: Almost Blank Subframe (ABS)
- 2: pico cell
- 2.1: subframe
- 3: cell border area
- 4: macro eNB
- 4.1-4.4: installation place
- 5: pico eNB
- 6, 6': bias value
- 7: receive signal level of macro eNB
- 8: receive signal level of pico eNB
- 20: pedestrian street
- 30: highway
- 40: public place

## Claims

1. Method for finding an optimal position of a pico eNB (5) of a new pico cell (1) within the radio footprint of a macro cell (1) served by a macro eNB (4) comprising the following steps:
a) exploring at least two different installation places (4.1-4.4) for a pico eNB (5) within the radio footprint of a macro cell (1);
b) installing the pico eNB (5) at an installation place (4.1-4.4);
c) putting the pico eNB (5) into operation to enable mobile terminals to initiate a handover request;
d) counting the handover requests from mobile terminals served by the macro eNB (4) of the macro cell (1) towards the pico eNB (5) of the pico cell (2) by the macro eNB (4) or the macro cell management system;
e) repeating steps b) - d) for all explored installation places (4.1 - 4.4);
f) selecting the optimal installation place (4.1-4.4) by comparing the number of handover requests within a predetermined duration of time and choosing the installation place (4.1-4.4) with maximum number of handover requests.

2. Method according to claim 1, wherein the pico eNB (5) is a temporarily installed base station.

3. Method according to any one of the preceding claims, wherein the pico cell (2) is configured to enable mobile terminals to detect the pico cell (2) and to request a handover from the macro cell towards the pico cell.

4. Method according to any one of the preceding claims, wherein the pico eNB (5) is configured to transmit only signals for the handover of a mobile terminal from the macro cell (1) to the pico cell (2).

5. Method according to any one of the preceding claims, wherein the pico cell (2) is configured not providing a broadcast channel.

6. Method according to any one of the preceding claims, wherein the pico eNB (5) is a test pico eNB which can be reused for each deployment analysis.

7. Method according to claim 6, wherein the pico eNB (5) is battery-powered.

8. Method according to any one of the claims 1 to 5, wherein the pico eNB (5) is a fully operational pico eNB (5) which is configured with limited functionality for measurement purposes.

9. Method according to any one of the preceding claims, wherein the number of handover requests is sequentially determined by using a sole pico eNB (5).

10. Method according to any one of the preceding claims, wherein the handover requests are counted in the pico cell border area (3), which is scheduled during Almost Blank Subframes (1.2) of the macro cell (1).

11. Method according to claim 10, wherein the maximum number of handover requests is counted at different bias values (6, 6'), wherein the bias value (6, 6') defines the handover condition between the macro cell (1) and the pico cell (2).

12. Method according to claim 11, wherein the bias value (6, 6') is chosen in the range of 0dB to 20dB.

13. Method according to any one of the preceding claims, wherein the optimal installation place (4.1 - 4.4) is determined by also evaluating the mobile terminal speed estimation value of the macro cell (1).

14. Method according to any one of the preceding claims, wherein the optimal installation place (4.1-4.4) is determined by establishing the maximum number of handover requests for different bias values (6, 6') and determining the installation place (4.1-4.4) which obtained the maximum number of handover requests at the different bias values (6, 6') most frequently.

15. Method according to any one of the preceding claims, wherein the macro cell (1) is configured to block the handover from the macro cell (1) towards the pico cell (2).

## Patentansprüche

1. Verfahren zum Finden einer optimalen Position eines Piko-eNB (5) einer neuen Pikozelle (1) innerhalb eines Funkbereichs einer Makrozelle (1), die von einem Makro-eNB (4) versorgt wird, die folgenden Schritte umfassend:
a) Untersuchen von mindestens zwei verschiedenen Installationsorten (4.1-4.4) für einen Piko-eNB (5) innerhalb des Funkbereichs einer Makrozelle (1);
b) Installieren des Piko-eNB (5) an einem Installationsort (4.1-4.4);
c) Inbetriebnehmen des Piko-eNB (5), um mobilen Endgeräten die Initiierung einer Handover-Anforderung zu ermöglichen;
d) Zählen der Handover-Anforderungen von mobilen Endgeräten, die vom Makro-eNB (4) der Makrozelle (1) versorgt werden, an den Piko-eNB (5) der Pikozelle (2) durch den Makro-eNB (4) oder das Makrozellenverwaltungssystem;
e) Wiederholen der Schritte b)-d) für alle untersuchten Installationsorte (4.1-4.4);
f) Auswählen des optimalen Installationsorts (4.1-4.4) durch Vergleichen der Anzahl der Handover-Anforderungen innerhalb einer bestimmten Zeitspanne und Wählen des Installationsorts (4.1-4.4) mit der höchsten Zahl an Handover-Anforderungen.

2. Verfahren nach Anspruch 1, wobei der Piko-eNB (5) eine vorübergehend installierte Basisstation ist.

3. Verfahren nach einem der vorstehenden Ansprüche, wobei die Pikozelle (2) dafür ausgelegt ist, mobilen Endgeräten ein Erkennen der Pikozelle (2) und ein Anfordern eines Handovers von der Makrozelle an die Pikozelle zu ermöglichen.

4. Verfahren nach einem der vorstehenden Ansprüche, wobei der Piko-eNB (5) dafür ausgelegt ist, nur Signale für den Handover eines mobilen Endgeräts von der Makrozelle (1) an die Pikozelle (2) zu senden.

5. Verfahren nach einem der vorstehenden Ansprüche, wobei die Pikozelle (2) dafür ausgelegt ist, keinen Rundfunkkanal bereitzustellen.

6. Verfahren nach einem der vorstehenden Ansprüche, wobei der Piko-eNB (5) ein Prüf-Piko-eNB ist, der für jede Aufstellungsanalyse wiederverwendet werden kann.

7. Verfahren nach Anspruch 6, wobei der Piko-eNB (5) batteriebetrieben ist.

8. Verfahren nach einem der Ansprüche 1 bis 5, wobei der Piko-eNB (5) ein voll betriebsfähiger Piko-eNB (5) ist, der für Messzwecke mit einer beschränkten Funktionalität konfiguriert ist.

9. Verfahren nach einem der vorstehenden Ansprüche, wobei die Anzahl der Handover-Anforderungen unter Verwendung eines einzigen Piko-eNB (5) der Reihe nach festgestellt wird.

10. Verfahren nach einem der vorstehenden Ansprüche, wobei die Handover-Anforderungen im Pikozellenrandbereich (3) gezählt werden, der während Almost Blank Subframes (1.2) der Makrozelle (1) eingeplant ist.

11. Verfahren nach Anspruch 10, wobei die höchste Zahl der Handover-Anforderungen bei unterschiedlichen Bias-Werten (6, 6') gezählt wird, wobei der Bias-Wert (6, 6') die Handover-Bedingung zwischen der Makrozelle (1) und der Pikozelle (2) definiert.

12. Verfahren nach Anspruch 11, wobei der Bias-Wert (6, 6') im Bereich von 0 dB bis 20 dB gewählt wird.

13. Verfahren nach einem der vorstehenden Ansprüche, wobei der optimale Installationsort (4.1-4.4) dadurch bestimmt wird, dass auch ein Schätzwert der Makrozelle (1) für die Geschwindigkeit des mobilen Endgeräts evaluiert wird.

14. Verfahren nach einem der vorangehenden Ansprüche, wobei der optimale Installationsort (4.1-4.4) bestimmt wird durch Ermitteln der höchsten Anzahl von Handover-Anforderungen für unterschiedliche Bias-Werte (6, 6') und durch Bestimmen des Installationsorts (4.1-4.4), der bei den unterschiedlichen Bias-Werten (6, 6') am häufigsten die höchste Zahl von Handover-Anforderungen erhalten hat.

15. Verfahren nach einem der vorstehenden Ansprüche, wobei die Makrozelle (1) dafür ausgelegt ist, den Handover von der Makrozelle (1) an die Pikozelle (2) zu blockieren.

## Revendications

1. Procédé permettant de trouver une position optimale d'un pico eNB (5) d'une nouvelle pico cellule (1) à l'intérieur de l'empreinte radio d'une macro cellule (1) desservie par un macro eNB (4) comprenant les étapes suivantes :
a) l'exploration d'au moins deux places d'installation (4.1 à 4.4) différentes pour un pico eNB (5) à l'intérieur de l'empreinte radio d'une macro cellule (1);
b) l'installation du pico eNB (5) à une place d'installation (4.1 à 4.4) ;
c) la mise en service du pico eNB (5) pour permettre à des terminaux mobiles d'initier une demande de transfert ;
d) le comptage des demandes de transfert à partir des terminaux mobiles desservis par le macro eNB (4) de la macro cellule (1) vers le pico eNB (5) de la pico cellule (2) par le macro eNB (4) ou le système de gestion de la macro cellule ;
e) la répétition des étapes b) à d) pour toutes les places d'installation (4.1 à 4.4) explorées ;
f) la sélection de la place d'installation (4.1 à 4.4) optimale en comparant le nombre de demandes de transfert pendant une durée prédéterminée et en choisissant la place d'installation (4.1 à 4.4) avec le nombre maximal de demandes de transfert.

2. Procédé selon la revendication 1, dans lequel le pico eNB -5) est une station de base installée temporairement.

3. Procédé selon l'une quelconque des revendications précédentes, dans lequel la pico cellule (2) est configurée pour permettre aux terminaux mobiles de détecter la pico cellule (2) et de demander un transfert de la macro cellule vers la pico cellule.

4. Procédé selon l'une quelconque des revendications précédentes, dans lequel le pico eNB (5) est configuré pour transmettre uniquement des signaux pour le transfert d'un terminal mobile à partir de la macro cellule (1) vers la pico cellule (2).

5. Procédé selon l'une quelconque des revendications précédentes, dans lequel la pico cellule (2) est configurée en ne fournissant pas un canal de diffusion.

6. Procédé selon l'une quelconque des revendications précédentes, dans lequel le pico eNB (5) est un pico eNB test qui peut être réutilisé pour chaque analyse de déploiement.

7. Procédé selon la revendication 6, dans lequel le pico eNB (5) est alimenté par une batterie.

8. Procédé selon l'une quelconque des revendications 1 à 5, dans lequel le pico eNB (5) est un pico eNB (5) totalement opérationnel qui est configuré avec une fonctionnalité limitée pour des besoins de mesures.

9. Procédé selon l'une quelconque des revendications précédentes, dans lequel le nombre de demandes de transfert est déterminé de manière séquentielle en utilisant un pico eNB (5) unique.

10. Procédé selon l'une quelconque des revendications précédentes, dans lequel les demandes de transfert sont comptées dans la zone de bordure de la pico cellule (3) qui est programmée en sous-trames presque vides (1.2) de la macro cellule (1).

11. Procédé selon la revendication 10, dans lequel le nombre maximal de demandes de transfert est compté au niveau de différentes valeurs de polarisation (6, 6'), où la valeur de polarisation (6, 6') définit l'état de transfert entre la macro cellule (1) et la pico cellule (2).

12. Procédé selon la revendication 11, dans lequel la valeur de polarisation (6, 6') est choisie dans la gamme de 0 dB à 20 dB.

13. Procédé selon l'une quelconque des revendications précédentes, dans lequel la place d'installation (4.1 à 4.4) optimale est déterminée en évaluant également la valeur d'estimation de la vitesse du terminal mobile de la macro cellule (1).

14. Procédé selon l'une quelconque des revendications précédentes, dans lequel la place d'installation (4.1 à 4.4) optimale est déterminée en établissant le nombre maximal de demandes de transfert pour différentes valeurs de polarisation (6, 6') et en déterminant la place d'installation (4.1 à 4.4) qui a obtenu le plus fréquemment le nombre maximal de demandes de transfert aux différentes valeurs de polarisation (6, 6').

15. Procédé selon l'une quelconque des revendications précédentes, dans lequel la macro cellule (1) est configurée pour bloquer le transfert de la macro cellule (1) vers la pico cellule (2).
